# EUROPEAN PATENT APPLICATION

(11) **EP 4 036 829 A1**
(43) Date of publication of application: **03.08.2022**
(21) Application number: 22305088.1
(22) Date of filing: 27.01.2022
(51) Int. Cl.: G06Q 10/08, G07B 17/00

(54) **GENERATION AND MANAGEMENT OF PRE-PAID RETURN SHIPMENT POSTAGE**

(30) Priority: 27.01.2021 US 202117159499
(71) Applicant: Quadient Technologies France, 92220 Bagneux (FR)
(72) Inventor: WILSON, Kirk Lane, STRATFORD, CT, 06614 (US)
(74) Representative: Cabinet Beau de Loménie

(57) **Abstract**

Systems and techniques are provided that allow for pre-paid return shipping labels to be generated using an automated kiosk or comparable device. A return shipper provides an item to be sent to the initial shipper to the kiosk, which verifies that the item matches the initially-shipped item and generates a suitable return shipping label.

## Description

### BACKGROUND

Online commerce and similar endeavors rely on the availability of efficient and widely available systems for shipping packages from one entity to another, typically via service providers such as the USPS and other national or international postal services, FedEx^{®}, DHL^{®}, and UPS^{®}, and other foreign and domestic commercial shipping service providers. Such systems typically provide techniques to pre-pay for the initial shipping postage, such as by purchasing pre-paid indicia that are affixed to the package to be mailed. Some shippers, such as online and mail-order stores, also may provide various return shipping options that allow initial recipients to return packages that were sent to them by the initial shipper. For example, online stores often provide an option for an initial recipient to return a purchased item for a refund. The cost of the return shipping may be paid by the initial recipient or by the initial shipper.

As used herein, an "initial shipper" is an entity that initially sends goods through a mail stream in a package or other mail piece. Similarly, an "initial recipient" is a party that receives the initial shipment after transport through the mail stream. When goods are returned via a return shipment technique, including techniques disclosed herein, the initial recipient may be considered a "return shipper" because they initiate the return shipment. Similarly, the initial shipper may be considered a "return recipient" because they receive the return shipment. A "shipping provider" is any entity that provides shipment services of mail pieces, such as the United States Postal Service (USPS) or other local, country, or regional mail services, commercial shippers such as FedEx, DHL, and the like, and service and solution providers such as Quadient and the like.

### BRIEF SUMMARY

Embodiments disclosed herein provide methods and systems for providing return shipping postage via an automated kiosk. Features of the disclosed methods and systems include receiving, from a return shipper, a computer-readable representation of a unique identifier associated with a request to return an item sent by an initial shipper to the return shipper, obtaining shipping dimensions of a package from the return shipper, providing the unique identifier to a shipping provider, responsive to providing the unique identifier to the shipping provider, receiving, from the shipping provider, a return shipping label, providing the return shipping label to the return shipper, and receiving, from the return shipper, the package and the return shipping label. The kiosk may automatically measure dimensions of the package, or they may be provided by the return shipper manually or via a computer-readable representation of package information such as a bar code or QR code. The kiosk may validate the shipping dimensions by comparing the shipping dimensions to a pre-defined set of dimensions or a range of dimensions, such as those provided by an initial shipper or a shipping provider. The dimensions may correspond to those of an item sent to the initial recipient.

According to an embodiment, a shipping provider may provide the return shipping label by receiving a request for a return shipping label for a return shipment associated with an initial shipper; verifying sufficient funds exist in a VPSD associated with an account of the initial shipper and, subsequently decrementing a register of the VPSD in an amount sufficient to generate the return shipping label; generating a return shipping label; receiving a unique identifier corresponding to the return shipment package; receiving dimensions of a package to be sent with the return postage label; verifying that the dimensions are within a range allowed for an initial shipment sent by the initial shipper and associated with the unique identifier; and responsive to the verifying, providing the return shipping label. The request for the shipping label and/or the unique identifier may be received from the return shipper or from the automated kiosk. The generated return shipping label may be provided to an automated kiosk to provide to the return shipper or to affix to the return shipment automatically.

Additional features, advantages, and embodiments of the disclosed subject matter may be set forth or apparent from consideration of the following detailed description, drawings, and claims. Moreover, it is to be understood that both the foregoing summary and the following detailed description are illustrative and are intended to provide further explanation without limiting the scope of the claims.

### BRIEF DESCRIPTION OF THE DRAWINGS

The accompanying drawings, which are included to provide a further understanding of the disclosed subject matter, are incorporated in and constitute a part of this specification. The drawings also illustrate embodiments of the disclosed subject matter and together with the detailed description serve to explain the principles of embodiments of the disclosed subject matter. No attempt is made to show structural details in more detail than may be necessary for a fundamental understanding of the disclosed subject matter and various ways in which it may be practiced.
FIG. 1 shows an example arrangement of devices according to embodiments of the disclosed subject matter.
FIG. 2 shows an example of communication and data flow according to an embodiment of the disclosed subject matter.
FIG. 3 shows a schematic view of an example kiosk according to an embodiment of the disclosed subject matter.
FIG. 4 shows an example computer architecture suitable for implementing embodiments of the disclosed subject matter.

### DETAILED DESCRIPTION

As online commerce and other activities increase in popularity, so too does the need for efficient and convenient systems and methods for return shipping. For example, many online and mail-order vendors provide various return shipping programs that allow customers to return purchases that are incorrect, damaged, unwanted, and the like. The use of return shipping is not limited to online commerce, but is more generally applicable in any situation where an initial recipient may need or want to return a shipment to an initial shipper.

Current solutions for return shipping typically use a post-paid regime, in which a party is only charged for the return shipment when a mail piece actually enters the mail stream for delivery back to the initial shipper. For example, many online commerce merchants provide a system that allows initial recipients to return goods by obtaining a shipping label that is affixed to the return package. The shipping label typically has a barcode, QR code, or the like that enables the shipping vendor to determine the identity of the initial shipper and charge them for the cost of the return shipment. Thus, the initial shipper may provide a return label with every package to make the return process relatively easy for customers. One downside of such a system is that the initial shipper may not be able to predict the cost of return shipping with any accuracy, since costs are incurred as shipments are returned. To address this, some initial shippers only provide return shipping labels upon request, often requiring the initial recipients to request approval for the return. Other initial shippers may not provide return shipping labels at all, instead providing credit for the cost of the return or requiring customers (as initial recipients) to bear the cost of the return postage. Such systems are more burdensome and/or costly for customers and therefore maybe less desirable both to customers and merchants.

Pre-pay return shipping systems have not been adopted previously due to expected and potential regulatory and administrative burdens associated with them. For example, managing the generation of shipping labels for the purpose of return shipments processed within the USPS is relatively difficult due to strict USPS prepay policies regarding postage generation. The complexity of a pre-pay model mostly centers on the idea of determining a shipping cost which requires parcel dimensions and weight. This can make it difficult for the original sender to generate a shipping label since the return shipper (the customer) is responsible for packaging the shipment. Additionally, in some cases using the USPS for return shipments may require the retailer to pay for postage that may not get used requiring the extra work in generating a refund. The USPS and other systems also offer post-pay options for return shipping, but there is no way in such systems to control costs that may arise with unexpected or unreasonable physical dimensions for the return shipment, including total weight, outer dimensions, and the like. As an alternative, online retailers typically process return shipments by using carriers who employ a post-pay system since the cost of returning an item can be determined after the parcel has entered the carrier's infrastructure, or at the point of entry, as previously disclosed.

Current return shipping systems also typically require a return shipper to provide a return shipment parcel to a shipper or intermediary in person. This may require the return shipper either to visit a return shipping office, such as a USPS location, or to arrange for the return shipment to be picked up at the shipper's home or other location. Regardless, conventional techniques often require the return shipper to be assisted by a human operator to process the return shipment, such as where a USPS or other shipping provider employee verifies the dimensions of a parcel and enters the return shipment information into a tracking system. In some cases, such as during an epidemic, pandemic, or other health emergencies, it may be desirable to minimize interactions between return shippers and other humans. It also may be desirable to provide return shipping capabilities at times when it is inconvenient or overly costly for a business establishment to remain open, such as outside of normal business hours, over holidays, late at night, and the like. Embodiments disclosed herein may address such needs by providing automated kiosks that are able to receive a parcel from a return shipper without needing another human attendant.

Embodiments disclosed herein provide improved return shipping systems and techniques that make the return shipping process relatively simple and efficient for initial recipients, while using a pre-pay system that allows initial shippers to more efficiently track and predict costs associated with return shipments. In some embodiments, methods and systems are provided for creating return shipment postage using a virtual postal security device (PSD).

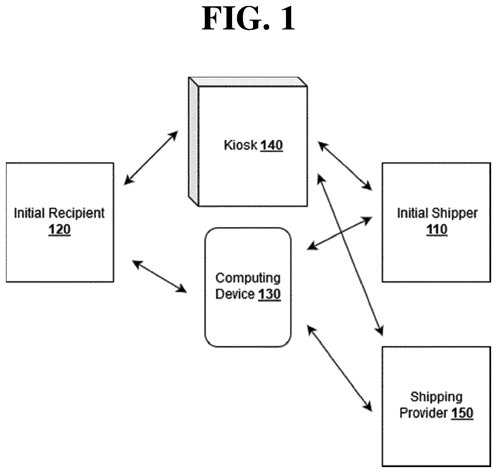

FIG. 1 shows an example system and devices according to embodiments disclosed herein. An initial shipper 110 may send a shipment to an initial recipient 120. The initial recipient 120 may wish to return the shipment to the initial shipper 110. To do so, the initial recipient 120 may use a local computing device 130, preferably a mobile device such as a phone or tablet, and/or a kiosk or similar physical device 140 as disclosed herein. As used herein, a "kiosk" refers to an automated, integrated device that can receive parcels from return shippers, analyze and/or verify information about the parcel such as physical dimensions (i.e., weight, length, height, and width), and securely store the parcel for retrieval by a shipping provider. A kiosk may be, for example, a computerized station at a retail location of a shipping provider, a separate, stand-alone structure, a parcel locker, or a combination of computerized components integrated with other related devices that provides the functionality disclosed herein. A kiosk may include a general-purpose computer processor, user interfaces, communication interfaces, and the like, but generally is restricted to the functions associated with return shipping disclosed herein and cannot be used as a general-purpose computer. That is, the kiosk may be a dedicated, special-purpose computing device that is limited in functionality to the features and operations disclosed herein. The kiosk may provide an interface for the initial recipient 120 to request the return shipment from the initial shipper 110, as well as simplifying communication between the initial shipper 110, the initial recipient 120, and a shipping provider 150, as disclosed in further detail herein. In an embodiment, the initial recipient 120, subsequent to receiving an initial shipment from the initial shipper 110, may interface with the initial shipper 110 and the shipping provider 150 only through a kiosk 140, only through a computer 130, or a combination thereof. It may be preferred for the initial shipper to interface with the shipper 110 and provider 150 only through a kiosk 140 as disclosed herein, for example to improve consistency of a user interface, to reduce unused shipping labels, and the like.

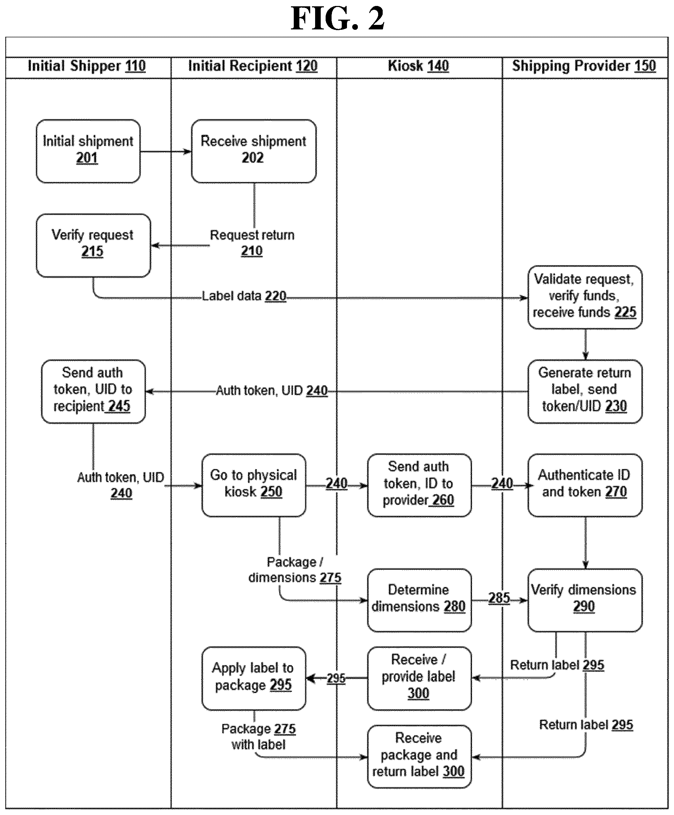

FIG. 2 shows an example process according to an embodiment disclosed herein. As previously disclosed, in many cases an initial shipper 110 will send a package 201 that is received by an initial recipient 120 at 202, at least a portion of which the initial recipient later desired to return to the initial shipper 110. However, the systems and processes disclosed herein do not require initial and return shipments to be between the same entities. For example, in some embodiments a return shipment may be sent to a different entity than the initial shipper, such as where the initial shipper has arranged for warranty or other returns to be sent to a servicing entity or similar. One of skill in the art will understand that the processes and systems disclosed herein may be used between any entities which, in a particular case, fulfill the same roles as those described for the initial and return shippers and other entities described herein.

Presuming the initial recipient desires to send a return shipment, label information from the initial shipper 110 may be pre-generated upon receiving a request for a shipment return from an initial recipient 120, i.e., the return sender. For example, the initial shipper 110 may be an online or other vendor, and the initial recipient may be a customer wishing to return an item purchased from the vendor. At 210, the initial recipient may request or otherwise notify the initial shipper that return shipping is desired. The initial shipper may verify the request at 215, such as by comparing the item to be returned to sales records or other customer records, such as to determine whether the item to be shipped is still covered by the initial shipper's return policy, or similar. The policies, requirements, and parameters of a return for a particular shipper are incidental to the present subject matter, and in some cases minimal or no such verification may be performed depending upon the initial shipper's policies. After receiving the notification or request 210, at 220, the initial shipper 110 sends pre-generated label data to a shipping provider 150, such as via an Application Programming Interface (API) or similar interface with the shipping provider 150. The label data 220 may include, for example, the initial shipper's return address, the initial recipient's delivery information, or other information typically included on shipping labels, particularly return shipping labels. Alternatively or in addition, some data may be provided by the return shipper via a keyboard, voice recognition, optical character recognition (OCR), bar code or QR code scanner, or the like. For example, the return shipper may provide their own address, the return address, or the like via any suitable interface. As a specific example, the return shipper may provide an initial shipping label to the kiosk, from which information such as the initial shipper's return address may be extracted via OCR or by scanning a bar code or QR code included on the label. As another example, the return shipper may provide their own return mailing address via their mobile device 130, or an interface on the kiosk 140 such as a real or virtual keyboard, microphone, touch screen lookup, or the like. Information also may be obtained directly from the return shipper's mobile device, such as via a local connection such as wifi or Bluetooth, or via scanning a bar code, QR code, or other graphical data representation shown on the device's display.

At 230, the shipping provider 150 may generate or otherwise pre-process a return label, similar to a return label generated in a conventional Request to Send (RTS) request. A return label may be pre-processed, for example, by generating label data that includes all information necessary for the return shipment to be processed and delivered to the initial shipper without yet charging any shipping fees for the return shipment. For example, in a pre-paid system such as the USPS, the label data may include weight and other dimension thresholds, the initial shipper's meter account number and shipping address, the return shipper's address, service and rate codes to be used for the shipment, and the like. This data may be generated by the system prior to receipt of payment for the label or generation of the physical label. Such a request received from the initial shipper 110 also may be validated by the shipping provider 150 at 225, such as via the API, to verify that the request is legitimate and associated with a customer of the shipping provider. For example, the shipping provider may verify that the request matches an expected return shipment. The shipping provider 150 also may verify that there are sufficient funds available on a virtual PSD (VPSD) meter account associated with the initial shipper 110 to pay for the requested shipment at 225, typically before generating the return label at 230. Presuming sufficient funds exist, the provider 150 may decrement and/or increment appropriate registers of the VPSD to receive sufficient funds to generate the requested shipping label. That is, the provider may obtain payment for the return shipping label from a suitable account of the initial shipper 110. In some embodiments the funds need not be obtained from a VPSD or may be obtained from a different VPSD than that of the initial shipper. For example, the account may be a shipping provider VPSD associated with an e-commerce retailer or other initial shipper, in which case the retailer's funds are used for the return label. As another example, the shipping provider's meter funds may be used and the initial shipper may be billed later for the return shipping cost. Funds also may be obtained from any pre-arranged funding source without using a VPSD or equivalent device, such as where an initial shipper has made a funding source such as a direct transfer bank account, credit account, or the like available to the shipping provider for such purpose. Also at 230, the shipping provider may store one or more records linking a unique identifier and/or authentication token to the generated shipping label and/or the particular return shipment for which the label data was received. For example, the initial shipper 110 may provide data for any potential return shipment, for every shipment that may result in a return shipment, or only for specifically-requested return shipments. These records may be used later to identify and provide the appropriate return shipping label, such as at 240/270.

At 250, the shipping provider 150 sends a reply to the initial shipper 110 that includes a unique identifier that can be used to identify and authenticate the request for return shipping 240. The reply also may include an authentication token, such as where one or more forms of user authentication and/or secure communication are used. The specific form of authentication token used may be selected based on other features or constraints of the system. The initial shipper 110 then sends the identifier to the initial recipient 120 at 245, who now will be the become the return shipper for a package using the return label as disclosed in further detail herein. For example, the initial shipper 110 may send a barcode or similar image that encodes the identifier to the initial recipient via email, text message, or the like, after receiving it from the shipping provider 150. The identifier may encode, or may be linked to a record of a set of threshold dimensions for the item to be sent in the return shipment. For example, where a specific item was purchased by the initial recipient from the initial shipper, the dimensions of the item will be known by the initial shipper 110 and threshold dimensions may be set that include the known dimensions as well allowing additional space and weight for a reasonable amount of packaging material based on the specific item. Notably, the expected dimensions may be determined and thresholds applied on an item-by-item basis even where multiple items were sent to the initial recipient in a single package. This allows for an initial recipient to return only a portion of items received in a single shipment while still allowing for verification of the expected dimensions of the return shipment.

At 260, the return shipper sends 120 or initiates a request to the shipping provider's system 150, such as via the API, using the identifier received from the initial shipper. This may be done, for example, using an internet-based interface, a physical kiosk or similar location, or a combination thereof.

For example, when using a kiosk as disclosed herein, the return shipper may bring the identifier to a physical kiosk at 250, such as by bringing a barcode or similar graphical representation on a phone app, physical copy, or the like. The kiosk may then communicate with the shipping provider as disclosed herein, such as by transmitting the identifier to the provider 150 at 260.

At 270, the shipping provider authenticates the kiosk and the request by verifying the identifier, such as by comparing the two to a record of the initial identifier and token sent to the initial shipper at 250. The shipping provider then sends a message to the customer confirming that the shipment information has been received.

The return shipper 120 may provide parcel dimensions 275 for the return shipment, or may provide the package containing the return shipment to a kiosk or similar physical device, which can automatically determine the dimensions of the package at 280 such as via laser, infrared (IR), or similar measurement for the outer dimensions, and a digital scale or similar for the weight of the return package.

At 285, these dimensions may be sent to the shipping provider 150, which checks the provided or obtained dimensions to verify that they are within the thresholds set at 150 or elsewhere during the process at 290. Alternatively, the kiosk 140 may perform this verification through communication with the provider 150. If the dimensions are valid, a return shipping label may be generated using stored funds in the initial shipper's VPSD meter, and provided to the return shipper at 295. For example, the return shipping label may be provided to a kiosk to which the return shipper has taken the package for shipping back to the return recipient (initial shipper). Alternatively, a kiosk or similar device as disclosed herein may automatically receive the return package and apply the return shipping label received from the shipping provider. If the return shipper has not yet provided the package to the kiosk, they may do so after providing the dimensions or allowing the kiosk to determine the dimensions, and/or after applying the return shipping label to the package. For example, the return shipper 120 may apply the return shipping label to the package, and place the package with the label applied in a collection bin in the kiosk at 300.

In an embodiment, a kiosk 140 as previously disclosed with respect to FIG. 1, or other similar physical device, may be used to provide an interface between the return shipper, the shipping provider, and/or the initial shipper. For example, in an embodiment a return shipper 120 may initially request a return shipment such as disclosed at 210 via a computer, phone, tablet, or otherwise via a web-based or similar interface. Alternatively, the return shipper 120 may go to a physical kiosk 140, such as a self-service, standalone location at a shipping provider store location, a shopping mall, a separate booth-type kiosk installed at a generally convenient location, or the like, at which point a process described with respect to FIG. 2 may be completed via an interface provided by the kiosk. In an embodiment, a user device 130 may provide the user interface to the kiosk 140. For example, the user device 130 may initially connect to the kiosk 140 using any wireless or wired connection type and protocol. The kiosk may then provide sufficient information via the communication link with the device 130 that the device 130 can provide a user interface sufficient to operate the kiosk 140. In such an embodiment, when functions and processes of a kiosk 140 as disclosed and recited herein are performed by a user device 130, it will be understood that the device 130 is functioning as, and falls with the scope of the kiosk 140 as disclosed and recited.

More generally, any combination of any of the steps described with respect to FIG. 2 may be performed using a separate computing device or a kiosk as disclosed with respect to FIG. 1, in any combination between the two. It may be preferred for the return shipping label to be provided via a kiosk or similar physical device or location, to reduce the number of unused return shipping labels. This may be beneficial to the initial shipper and/or the shipping provider as it reduces or eliminates the need for refund requests in the case of unused return shipping labels since each return shipping label is pre-paid by the initial shipper as described with respect to FIG. 2. Similarly, except as explicitly described or required by context as disclosed herein, the shipping provider may communicate with an automated kiosk as disclosed, or directly with a return shipper such as via a local computing device. For example, in some cases a return shipping label may be provided directly to the return shipper, such as via an email, text message, or the like. Alternatively, the return shipping label may be provided to an automated kiosk or comparable device as disclosed, which in turn may provide the return shipping label to the return shipper.

Embodiments disclosed herein may allow for various processes to be performed by an automated kiosk and/or a shipping provider. For example, referring again to FIG. 2, an automated kiosk 140 or comparable device may receive a computer-readable representation of an authentication token, a unique identifier (UID), or a combination thereof as previously disclosed at 260. The token and/or UID may have been previously generated by the shipping provider 150 and provided to the return shipper at 240. The kiosk also may obtain shipping dimensions of a package for the return shipment at 275/280, either by automatically determining the dimensions or by receiving measurements of the dimensions from the return shipper. In some embodiments, the kiosk may validate the measurements obtained from the return shipper, such as by checking a provided weight using a built-in scale. If the measurements are not validated, the kiosk may require the return shipper to correct the dimensions in order to proceed. The kiosk 140 also may provide the token and/or UID to the shipping provider 150 for verification at 270 as previously disclosed, so that the return shipper can provide the linked return shipping label that may have been previously generated at 230. Alternatively or in addition, the shipping provider may provide shipping dimensions based upon the token and/or UID, or the shipping dimensions may be encoded in the token and/or UID, such as where they are encoded in a barcode or similar computer-readable representation. In response to the token and/or UID, the kiosk may receive the return shipping label at 300 as previously disclosed, as well as the package from the return shipper 120. In some embodiments, the kiosk 140 may perform a comparable or identical process even where the other entities involved may be partially or entirely different. For example, an intermediary entity may perform the steps described with respect to the shipping provider 150, such as where multiple kiosks are used by an enterprise that provides a unified interface to the shipping provider for all of the enterprise's kiosks, such as for centralized management and accounting. In such a configuration, the intermediary functions as, and may be considered to be, the shipping provider 150 as disclosed and recited herein.

Similarly, a shipping provider 150 may perform a process as shown in FIG. 2 even where the specific entities involved may differ from those shown and described in the example provided herein. For example, the provider 150 may receive a request for a return shipping label for a return shipment associated with an initial shipper at 225. The request may originate from an initial shipper 110, or it may be received from an intermediate entity or other source, such as where multiple shippers 110 are managed or coordinated by an enterprise. As previously disclosed, the shipping provider may verify that sufficient funds exist in a VPSD associated with an account of the initial shipper and, presuming funds are available, decrement and/or increment one or more registers of the VPSD in an amount sufficient to generate the return shipping label. At 230, the shipping provider may generate the return shipping label using the funds obtained from the VPSD and the label data 220 received from the initial shipper 110. The return shipping label also may be generated later, such as when the authentication token and/or unique identifier are received at 240/270, or when the dimensions of the return package are received and verified at 285/290. The dimensions may be verified to be within a range set by the initial shipper 110 for the shipment associated with the authentication token and/or the UID at 290, as previously disclosed. Presuming the dimensions are verified, sufficient funds were available, and no other errors are encountered, the shipping provider may then provide the return shipping label to the kiosk and/or the return shipper at 300. In some cases, steps described herein as being performed by the shipping provider may be provided by a related entity, sub-entity, or the like. As a specific example, management of the VPSD may be delegated to a separate entity by the shipping provider 150, such as where a shipping management service provides service directly to initial shippers 110 and acts as an interface to the shipping provider 150. As another example, authentication of the token may be deleted to a sub-entity responsible for security of the VPSDs and/or other aspects of the system. In general, as previously described, where an intermediate or other entity performs the same or intermediate steps that produce the same result as disclosed, the intermediary may be considered to be the associated entity as described and recited herein.

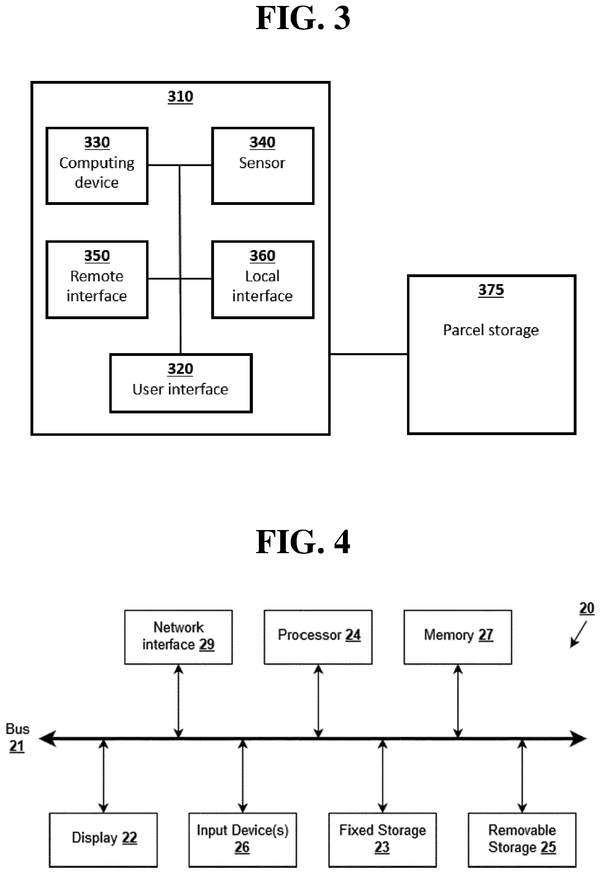

FIG. 3 shows a schematic view of an example kiosk device as disclosed herein. The kiosk 310 may include one or more of each of the components shown, including a computing device 330, sensor 340, remote communication interface 350, local communication interface 360, and user interface 320. The kiosk may include or may be communicatively coupled to a parcel storage system 375 such as a parcel locker. The user interface 320 may include a screen, keyboard, touch panel, microphone, camera, and the like, or any combination thereof. The user interface may be used by the kiosk to obtain information from the return shipper and/or the package being sent by the return shipper. For example, the return shipper may enter a destination address or other shipping information via the interface 320 by typing, speaking, providing OCR-readable text, or the like. The computing device 330 may be a general-purpose device such as described with respect to FIG. 4 that has been configured and adapted to serve the specific purposes disclosed herein as previously described, or it may be a special-purpose computer designed for the kiosk 310. One or more sensors 340 also may be used to obtain shipping and package information. For example, an automated or semi-automated scale to obtain the package weight, and/or optical, radar, physical, or other sensors may be used to obtain the outer package dimensions (length, width, height). In similar fashion to some user interfaces 320, a camera and OCR techniques, barcode scanner, or any other suitable sensor may be used as automated sensors to identify and obtain information from the package itself, such as from an OCR-readable packing label or the like. One or more remote interfaces 350 such as a network interface may be used to communicate with the shipping provider or other entities as previously disclosed, such as to obtain the package identifier or other information. A local interface such as a wifi, Bluetooth, or other local communication interface may be used to obtain information from the return shipper's device as previously disclosed, and/or to communicate with other local systems. For example, the remote interface 350 and/or the local interface 360 may communicate with the USPS or other shipping provider, such as to obtain current rate information, expected shipping times, and the like. The kiosk 310 may include, be integral with, or be in communication with a parcel storage device. The parcel storage 375 may be used to store packages received from return shippers until they are collected by the shipping provider. In some embodiments, the parcel storage 365 may be a special-purpose or general-purpose parcel locker, such as a general pickup and drop-off location for one or more shipping providers, a parcel receipt and shipping location such as a delivery box and/or drop-box in an apartment, office building, or the like, or any equivalent or combination thereof. Similarly, the kiosk 310 and/or the parcel storage 375 may be a stand-alone structure or may be integrated with other services and devices as previously disclosed herein.

Notably, embodiments disclosed herein allow for on-demand, pre-paid return shipping. Because package dimensions, including weights, may be verified at the time of shipping, complications that would arise using conventional return shipping techniques may be avoided. For example, the chance of package dimensions being incorrect or an incorrect item being returned is reduced or eliminated since the details of the item to be returned are known ahead of time and can be conveyed between the initial shipper, the kiosk, and the shipping provider. Embodiments disclosed herein also allow for an item to be returned in a different packaging than was used initially to send the item to the initial recipient. Since the item dimensions are known, even if the item is provided in a package of a different size, the kiosk may determine that the package is within an expected range of dimensions for the item before accepting the return shipment as previously disclosed herein. Such verification cannot be performed with conventional return shipping processes which require a human to accept the return shipment package, since the human operator typically will have no knowledge of the original shipment generally or knowledge of the specific dimensions of the item being returned. Furthermore, because the kiosk is automated and does not require a human operator to enter tracking or delivery information, the chance of human error during data entry is also removed.

Although the examples described above relate to a return of a purchased item, one of skill in the art will understand that the same processes, devices, and systems may be used in any situation in which goods are being exchanged and, specifically, in which one item with physical dimensions in a known range is being sent from one entity to another. For example, where two items are being exchanged, one item may be sent by the initial shipper to the initial recipient as previously disclosed herein. The initial recipient then may follow the same procedure as described for a return shipment, except instead of returning the same item sent by the initial shipper, the return shipper (initial recipient) may send an agreed-upon or otherwise expected item of known physical dimensions. The kiosk or equivalent device as disclosed herein then may follow the same process as described for the return shipment, but for the second item being sent to the initial shipper by the return shipper. The same options for payment also may be used, such that the initial shipper or a shipping provider may provide an account that is to be charged for one or both shipments.

Embodiments of the presently disclosed subject matter may be implemented in and used with a variety of component and network architectures. FIG. 4 is an example general-purpose computing device 20 suitable for implementing aspects of the presently disclosed subject matter as previously disclosed, such as a personal computing device, a kiosk and/or kiosk interface, or the like. The device 20 may be, for example, a desktop or laptop computer, a mobile computing device such as a phone or tablet, or the like, or it may be such a device embedded in a kiosk or similar physical location, or it may be an embedded computer component of such a kiosk. The device 20 may include a bus 21 which interconnects major components of the computer 20, such as a central processor 24, a memory 27 such as Random Access Memory (RAM), Read Only Memory (ROM), flash RAM, or the like, a user display or other output device 22 such as a display screen, one or more user input devices 26, which may include one or more controllers and associated user input devices such as a keyboard, mouse, touch screen, and the like, a fixed storage 23 such as a hard drive, flash storage, and the like, a removable storage unit 25 operative to control and receive an optical disk, flash drive, and the like, and a network interface 29 operable to communicate with one or more remote devices via a suitable network connection.

The bus 21 allows data communication between the central processor 24 and one or more memory components. Applications resident with the computer 20 are generally stored on and accessed via a computer readable medium, such as a fixed storage 23 and/or a removable storage 25 such as an optical drive, floppy disk, or other storage medium.

The fixed storage 23 may be integral with the computer 20 or may be separate and accessed through other interfaces. The network interface 29 may provide a direct connection to a remote server via a wired or wireless connection. The network interface 29 may provide such connection using any suitable technique and protocol as will be readily understood by one of skill in the art, including digital cellular telephone, Wi-Fi, Bluetooth(R), near-field, and the like. For example, the network interface 29 may allow the computer to communicate with other computers via one or more local, wide-area, or other communication networks, as described in further detail below.

More generally, various embodiments of the presently disclosed subject matter may include or be embodied in the form of computer-implemented processes and apparatuses for practicing those processes. Embodiments also may be embodied in the form of a computer program product having computer program code containing instructions embodied in non-transitory and/or tangible media, such as floppy diskettes, CD-ROMs, hard drives, USB (universal serial bus) drives, or any other machine readable storage medium, such that when the computer program code is loaded into and executed by a computer, the computer becomes an apparatus for practicing embodiments of the disclosed subject matter. Embodiments also may be embodied in the form of computer program code, for example, whether stored in a storage medium, loaded into and/or executed by a computer, or transmitted over some transmission medium, such as over electrical wiring or cabling, through fiber optics, or via electromagnetic radiation, such that when the computer program code is loaded into and executed by a computer, the computer becomes an apparatus for practicing embodiments of the disclosed subject matter. When implemented on a general-purpose microprocessor, the computer program code segments configure the microprocessor to create specific logic circuits.

In some configurations, a set of computer-readable instructions stored on a computer-readable storage medium may be implemented by a general-purpose processor, which may transform the general-purpose processor or a device containing the general-purpose processor into a special-purpose device configured to implement or carry out the instructions. Embodiments may be implemented using hardware that may include a processor, such as a general-purpose microprocessor and/or an Application Specific Integrated Circuit (ASIC) that embodies all or part of the techniques according to embodiments of the disclosed subject matter in hardware and/or firmware. The processor may be coupled to memory, such as RAM, ROM, flash memory, a hard disk or any other device capable of storing electronic information. The memory may store instructions adapted to be executed by the processor to perform the techniques according to embodiments of the disclosed subject matter.

The foregoing description, for purpose of explanation, has been described with reference to specific embodiments. However, the illustrative discussions above are not intended to be exhaustive or to limit embodiments of the disclosed subject matter to the precise forms disclosed. Many modifications and variations are possible in view of the above teachings. The embodiments were chosen and described in order to explain the principles of embodiments of the disclosed subject matter and their practical applications, to thereby enable others skilled in the art to utilize those embodiments as well as various embodiments with various modifications as may be suited to the particular use contemplated.

## Claims

1. A method of providing return shipping postage, the method comprising, at an automated kiosk:
receiving, from a return shipper, a computer-readable representation of a unique identifier associated with a request to return an item sent by an initial shipper to the return shipper;
obtaining shipping dimensions of a package from the return shipper;
providing the unique identifier to a shipping provider;
responsive to providing the unique identifier to the shipping provider, receiving, from the shipping provider, a return shipping label;
providing the return shipping label to the return shipper; and
receiving, from the return shipper, the package and the return shipping label.

2. The method of claim 1, wherein the step of obtaining the shipping dimensions comprises automatically measuring dimensions of the package by the automated kiosk.

3. The method of claim 1, wherein the step of obtaining the shipping dimensions comprises receiving the shipping dimensions from the return shipper.

4. The method of claim 1, wherein the step of obtaining the shipping dimensions comprises obtaining the shipping dimensions from a computer-readable representation received from the return shipper.

5. The method of claim 1, further comprising validating the shipping dimensions by comparing the shipping dimensions to a pre-defined set of dimensions or a range of dimensions.

6. The method of claim 5, wherein the validating comprises comparing shipping dimensions encoded in a computer-readable representation received from the return shipper to the obtained shipping dimensions.

7. The method of claim 4, wherein the validating comprises comparing the shipping dimensions to ranges of shipping dimensions received from the shipping provider or the initial shipper.

8. The method of claim 7, wherein the range is a specific set of shipping dimensions.

9. The method of claim 8, wherein the specific dimensions are based on an initial shipment.

10. The method of claim 1, further comprising receiving verification that the shipping dimensions are acceptable for the return shipment from the shipping provider.

11. A method of providing a return shipping label, the method comprising:
receiving a request for a return shipping label for a return shipment associated with an initial shipper;
verifying sufficient funds exist in a VPSD associated with an account of the initial shipper and, subsequent to the verifying:
decrementing a register of the VPSD in an amount sufficient to generate the return shipping label;
generating a return shipping label;
receiving a unique identifier;
receiving dimensions of a package to be sent with the return postage label;
verifying that the dimensions are within a range allowed for an initial shipment sent by the initial shipper and associated with the unique identifier; and
responsive to the verifying, providing the return shipping label.

12. The method of claim 11, wherein the request for the return shipping label is received from the return shipper or from an automated kiosk.

13. The method of claim 11, wherein the unique identifier is received from the return shipper or from an automated kiosk.

14. The method of claim 11, wherein the return shipping label is provided to an automated kiosk.
